# EUROPEAN PATENT APPLICATION

(11) **EP 4 711 872 A2**
(43) Date of publication of application: **18.03.2026**
(21) Application number: 25216111.2
(22) Date of filing: 17.11.2015
(51) Int. Cl.: G05B 19/418

(54) **METHOD FOR OPTIMIZING A WORK CYCLE IN A ROBOT SYSTEM**

(62) Divisional of application: 15797069.0
(71) Applicant: ABB SCHWEIZ AG, 5400 Baden (CH)
(72) Inventor: WESSEN, Johan, 722 11 Västerås (SE); KNUTAR, Frej, 752 72 Uppsala (SE)
(74) Representative: Kransell & Wennborg KB

(57) **Abstract**

A method for a robot system with at least two manipulators with a common work area, wherein the layout of the robot system is defined and the common work area between the at least two manipulators is divided to thereby obtain a work area division. The method is characterized in that at least one of the previous steps is repeated to thereby obtain a plurality of different combinations of layouts and work area divisions. For each of the combinations, a cycle time for at least one work cycle is calculated and the best cycle time is chosen to optimize the work cycle of the robot system.

## Description

### TECHNICAL FIELD

The present invention relates to work cycle optimization in robot systems having two or more manipulators with a common work area.

### BACKGROUND ART

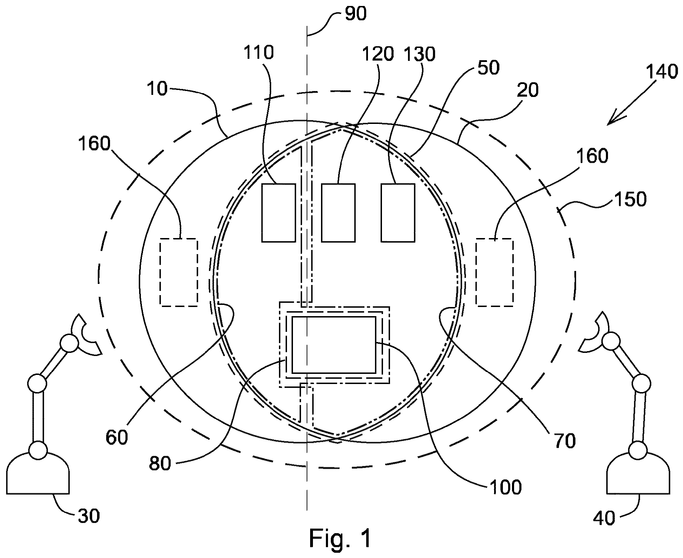

Referring to figure 1, in the context of the present disclosure a "maximum work area" 10, 20 refers to a volume that a manipulator 30, 40 can reach, the volume being constrained by the mechanical structure of the respective manipulator. A "common work area" 50 refers to a part of a maximum work area that each of a plurality of manipulators can reach, the respective volume depending on the relative position of the manipulators and being constrained by mechanical structures of the manipulators. An "exclusive work area" refers to a part of a maximum work area that only the respective manipulator can reach i.e. an exclusive work area is a result of a subtraction of a common work area from a maximum work area. An "allocated work area" 60, 70 refers to a part of a common work area that is allocated to a respective manipulator by means of software. An "actual work area" refers to a combination an exclusive work area and an allocated work area of a respective manipulator. A "joint work area" 80 refers to a part of an allocated work area that is allocated to a plurality of manipulators by means of software i.e. a joint work area is an intersection of two or more allocated work areas.

A work cycle of a robot system 140 comprises a sequence of tasks executed by the robot system. It is known to optimize work cycles in robot systems by automatically defining the order of tasks and allocating different tasks to different tools and/or manipulators. When configuring a robot system to execute a work cycle, the problem can be considered to consist of two problem parts: 1) defining the work cycle and 2) programming the robot system to move in accordance to the defined work cycle. These problem parts are often solved by different persons, and a level of difficulty to solve the second problem part strongly depends on the solution of the first problem part. Namely, conventional methods for solving the first problem part do not take into consideration many practical difficulties in executing the resulting work cycle during the second problem part. This is particularly true in robot systems having two or more manipulators with a common work area where collision avoidance between the manipulators becomes a significant practical difficulty. The work cycle resulting from the first problem part can be very efficient in theory, but in practice it may become very inefficient because the robot programmer solving the second problem part needs to enter many delays into the robot program in order to avoid collisions between the manipulators.

Figure 1 can be considered to represent a known solution (however, in combination with figure (s) 2 and/or 3 figure 1 can also be considered to represent the present invention) wherein, in order to avoid collisions between two manipulators, a work area division is done by dividing the common work area into right and left parts by a division plane 90. The left part is allocated to a first manipulator 30, and the right part is allocated to a second manipulator 40. In addition, a small volume belonging to the right part and occupied by a fixture 100 is allocated to the first manipulator, and a corresponding volume belonging to the left part is allocated to the second manipulator. Thereby, on one hand, each of the two manipulators is allowed to operate only within that part of the common work area that is allocated to it. On the other hand, parts of the allocated work areas intersect to form a joint work area at the fixture such that both of the two manipulators can operate at the fixture.

The robot system of figure 1 has first, second and third feeders 110, 120, 130, each of which is configured to feed respective individual first, second and third components (not shown) . The overall task is to assemble the three components together at the fixture. The relative positions of the maximum work areas, feeders and the fixture define a layout 150 of the robot system. In some occasions the layout can be chosen freely, while in other occasions the layout may be fixed or there may be a limited number of layout options. According to the given layout of figure 1 all the feeders are within the common work area, and there is an additional feeder location 160 at each exclusive work area providing alternative layout options. The work area division is done such that the first feeder is allocated to the first manipulator, and the second and third feeders are allocated to the second manipulator.

An advantage with the work area division is that the manipulators cannot collide with each other as long as they are operating within their actual work areas excluding the joint work area. Options to solve the above mentioned first problem are less, and even if this may result in not finding one of the most efficient (in theory) solutions to the first problem part, the solution to the second problem part probably becomes much simpler than in a case without the work area division. The solution to the overall problem is thereby improved, at least in most cases. It is to be understood that the number of solutions to the first problem part depends on many factors like whether or not the manipulators are identical (equally fast) , whether or not the manipulators carry identical tools, whether or not each tool is able to pick each component, whether or not a tool can carry more than one component as the time, etc. The number of possible solutions can in many cases be counted in hundreds or in thousands. It is assumed that a person skilled in the art is able to find more or less optimal solutions to the first problem part. The manipulators can still collide within the joint work area, but since this area is relatively small the respective delays that need to be entered into the robot program become few and are short.

According to known prior art solutions where the common work area is divided into parts that are allocated to different manipulators, the work area division is done only once on a given layout. The exercise is typically done manually by a human operator based on the experience of the same. Thereby, before any optimization of a work cycle takes place both the layout and the work area division are definitively defined, and the optimization only takes place with a single combination of layouts and work area divisions.

Consequently, the work area division is not part of the optimization problem, and if the operator failed to choose an optimal work area division for the given layout, the resulting work cycle may also not be optimal.

Documents WO2015113203A1, US20100241248A1, EP1090723A2, US6847922B1 and JP2003200368A disclose different methods for optimizing a work cycle in a robot system

### SUMMARY OF THE INVENTION

One object of the invention is to provide an improved work cycle optimization where work area division is part of the optimization problem.

This and other objects are achieved by a method and a device with the technical features according to the invention, which is defined by the appended independent claims. Optional features of the invention are defined by the appended dependent claims.

The invention is based on the realization that by calculating cycle times for work cycles on different combinations of layouts and work area divisions, the work area division becomes part of the optimization problem and a better optimized work cycle can be achieved.

According to a first aspect of the invention, there is provided a method for optimizing a work cycle in a robot system comprising at least two manipulators with a common work area. The method comprises the steps of: defining a layout; and defining a work area division by dividing the common work area between the at least two manipulators. The method further comprises the steps of repeating at least one of the previous steps to thereby obtain a plurality of different combinations of layouts and work area divisions, and, for each of the plurality of combinations, calculating a cycle time for at least one work cycle.

According to one embodiment of the invention, cycle times are calculated for a plurality of work cycles for each of the plurality of combinations. According to one embodiment of the invention, the method further comprises the step of running the work cycle with the shortest cycle time.

According to one embodiment of the invention, the step of defining the layout includes choosing a layout out of a limited number of possible layouts.

According to one embodiment of the invention, the step of defining the layout is executed by a computer.

According to one embodiment of the invention, the step of defining the work area division is executed by a computer According to one embodiment of the invention, the number of different combinations of layouts and work area divisions is at least five, such as at least ten, at least fifty, at least hundred, at least five hundred, at least thousand, at least five thousand, at least ten thousand, at least fifty thousand, or at least hundred thousand.

According to a second aspect of the invention, there is provided a robot system comprising: at least two manipulators with a common work area; and a robot controller comprising at least one layout. The robot controller is configured to: define a work area division by dividing the common work area between the at least two manipulators, define a plurality of different combinations of layouts and work area divisions, and calculate a cycle time for at least one work cycle for each of the plurality of combinations.

### BRIEF DESCRIPTION OF THE DRAWINGS

The invention will be explained in greater detail with reference to the accompanying drawings, wherein figure 1 shows a robot system with a first layout and a first work area division, figure 2 shows a robot system with the first layout and a second work area division, and figure 3 shows a robot system with a second layout and the second work area division.

### DESCRIPTION OF PREFERRED EMBODIMENTS

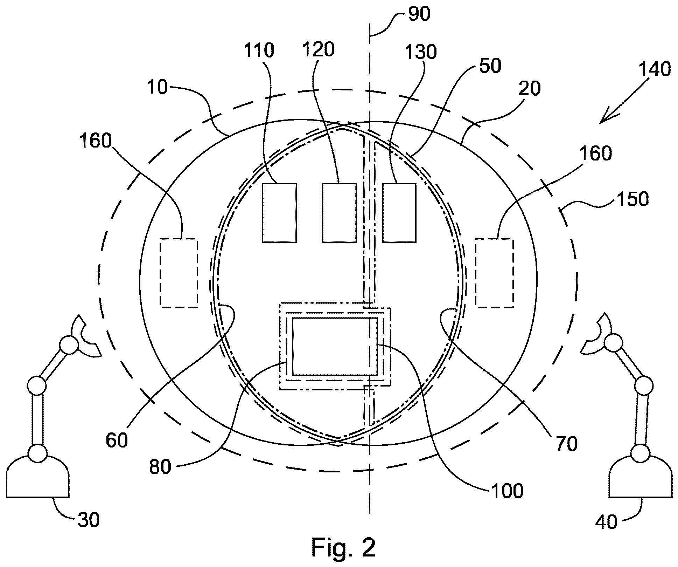

In the context of the present disclosure a "cycle time" may refer to a time needed for a robot system to execute a task sequence once. However, because of cyclic nature of work cycles a subsequent work cycle may start before a previous work cycle is ready. Therefore, the term "cycle time" may also refer to an average time needed for a robot system to execute the task sequence when a (large) number of task sequences is executed. Referring to figure 2, the given layout is the same as in figure 1, and also the overall task is the same (to assemble the three components together at the fixture) . However, the work area division is different in that the first and second feeders are allocated to the first manipulator, and only the third feeder is allocated to the second manipulator.

Supposing that with the work area division of figure 2 it is possible to achieve a shorter cycle time than with the work area division of figure 1, limiting the optimization problem to the single combination of layouts and work area divisions according to figure 1 would prevent the shorter cycle time from being discovered. That is, by increasing the number of different combinations of layouts and work area divisions for which cycle times are calculated, the possibility of arriving at the best solution also increases. There are at least two more alternative options for the work area division with the given layout of figures 1 and 2.

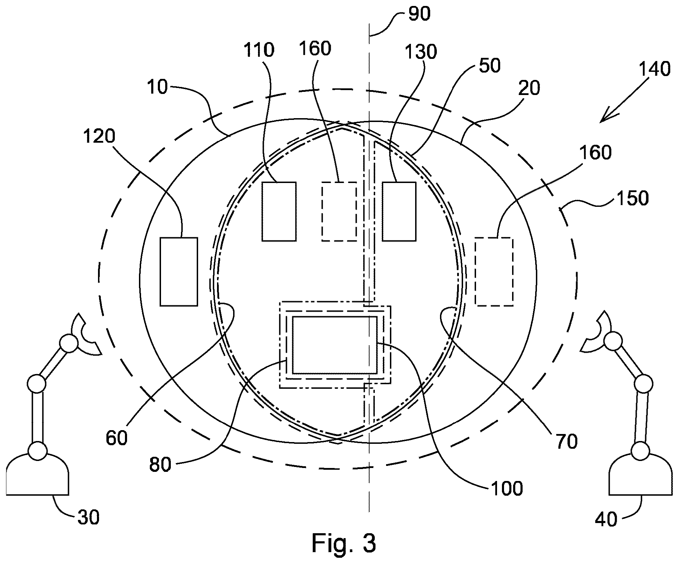

Namely, all the three feeders can be allocated to the first manipulator, or all the three feeders can be allocated to the second manipulator. A work area division where all the three feeders are allocated to the first manipulator can be advantageous for example in a situation where the first manipulator is for light loads and fast movements, and the second manipulator is for heavy loads and slow movements. If the payload of the first manipulator suffice for all the given tasks, then the shortest cycle time may be achieved by using only the first manipulator. Referring to figure 3, the given work area division is the same as in figure 2, and also the allocation of the feeders between the two manipulators is the same. The overall task, to assemble the three components together at the fixture, is also considered to be the same. However, the layout is different in that the second feeder is located within the exclusive work area of the first manipulator. With the given layout of figure 3 there are at least two more alternative options for the work area division. Namely, all the three feeders can be allocated to the first manipulator, or the first and third feeders can be allocated to the second manipulator.

It is to be understood that none of the figures 1 to 3 as such represents neither the prior art nor the present invention. In fact, any of the figures 1 to 3 on its own can be considered to represent prior art where the work area division is done manually and only once on a given layout. However, combinations of layouts and work area divisions corresponding to the combination of e.g. any two figures out of the figures 1 to 3 are not known from the prior art in the context of work cycle optimization.

In the given examples according to figures 1 to 3 the number of layout options is limited as the feeder locations and the locations of the fixture and the maximum work areas are predefined. However, if the feeder locations or the locations of the fixture and/or the maximum work areas can be chosen freely, the number of layout options becomes indefinite. As also the number of possibilities to allocate the feeders between the two manipulators can become very high, the exercise of manually arriving at an optimal or even satisfactory work area division in one try may become very demanding, and consequently a possibility to arrive at a close to optimal work cycle becomes low. However, when cycle times are optimized for a (large) number of different combinations of layouts and work area divisions, the possibility of arriving at a close to optimal work cycle becomes high. According to the present invention the layouts and the work area divisions can be defined manually, but preferably they are defined automatically. By applying appropriate constraints in defining layouts, a computer can be programmed to automatically define layouts and for each layout all available possibilities to allocate the feeders between the manipulators. A computer can thereby be configured to calculate e.g. hundreds of cycle times for each of thousands of different combinations of layouts and work area divisions, and thereby be in a position to choose the best solution among millions of alternatives. This would of course not be feasible in the case of manual definition of layouts and work area divisions, but on the other hand an experienced operator can achieve satisfactory results with only a couple of different combinations of layouts and work area divisions.

The invention is not limited to the embodiments shown above, but the person skilled in the art may modify them in a plurality of ways within the scope of the invention as defined by the claims. Thus, for example, layouts are not limited to comprise maximum work areas, feeders and fixtures, but can comprise any devices present in a robot system such as cameras, air guns, quality control jigs, etc. Moreover, instead of feeders, any appropriate means for presenting components to manipulators can be used.

Further advantageous embodiments of the invention include the following:
1. A method for optimizing a work cycle m a robot system comprising at least two manipulators with a common work area, the method comprising the steps of:
   - defining a layout; and
   - defining a work area division by dividing the common work area between the at least two manipulators;
   characterized by repeating at least one of the previous steps to thereby obtain a plurality of different combinations of layouts and work area divisions, and, for each of the plurality of combinations, calculating a cycle time for at least one work cycle.
2. A method according to embodiment 1, wherein cycle times are calculated for a plurality of work cycles for each of the plurality of combinations.
3. A method according to any of the preceding embodiments, wherein the method further comprises the step of running the work cycle with the shortest cycle time.
4. A method according to any of the preceding embodiments, wherein the step of defining the layout includes choosing a layout out of a limited number of possible layouts .
5.A method according to any of the preceding embodiments, wherein the step of defining the layout is executed by a computer .
6. A method according to any of the preceding embodiments, wherein the step of defining the work area division is executed by a computer.
7. A method according to any of the preceding embodiments, wherein the number of different combinations of layouts and work area divisions is at least five, such as at least ten, at least fifty, at least hundred, at least five hundred, at least thousand, at least five thousand, at least ten thousand, at least fifty thousand, or at least hundred thousand.
8. A robot system comprising:
   at least two manipulators with a common work area; and a robot controller comprising at least one layout,
   characterized in that the robot controller is configured to:
      - define a work area division by dividing the common work area between the at least two manipulators,
      - define a plurality of different combinations of layouts and work area divisions, and
      - calculate a cycle time for at least one work cycle for each of the plurality of combinations.
9. A robot system according to embodiment 8, wherein cycle times are calculated for a plurality of work cycles for each of the plurality of combinations.
10. A robot system according to any of the embodiments 8 to 9, wherein the method further comprises the step of running the work cycle with the shortest cycle time.
11. A robot system according to any of the embodiments 8 to 10, wherein the robot controller is configured to define the layout.
12. A robot system according to embodiment 11, wherein the robot controller is configured to choose the layout out of a limited number of possible layouts.
13. A robot system according to any of the embodiments 8 to 12, wherein the number of different combinations of layouts and work area divisions is at least five, such as at least ten, at least fifty, at least hundred, at least five hundred, at least thousand, at least five thousand, at least ten thousand, at least fifty thousand, or at least hundred thousand.

## Claims

1. A method for optimizing a work cycle in a robot system (140) comprising at least two manipulators (30, 40) with a respective maximum work area (10, 20), which is a volume that the respective manipulator (30, 40) constrained by its mechanical structure can reach, and with a common work area (50) which is a part of a maximum work area that each of the manipulators (30, 40) can reach, such that each manipulator (30, 40) has an exclusive work area that only the respective manipulator (30, 40) can reach, the method comprising the steps of:
- defining, in a computer, a layout (150) of the robot system (140); and
- defining, in the computer, a work area division (90) by dividing the common work area (50) between the at least two manipulators (30, 40);
**characterized by**
- repeating at least one of the previous steps, whereby is defined at least one further layout or at least one further work area division, or both of these, to thereby obtain a number of different combinations of layouts (150) of the robot system (140) and work area divisions (90),
- for each of said number of combinations, calculating, by the computer, a cycle time for at least one work cycle, which is a time needed for the robot system to execute a task sequence once or an average time needed for the robot system to execute the task sequence when a number of task sequences is executed, wherein the cycle time is calculated while each of the manipulators (30, 40) is allowed to operate only within its exclusive work area and within that part of the common work area which is allocated to the respective manipulator (30, 40) according of the work area division of that combination; and
- running the work cycle in accordance with that combination, from said combinations of layout and work area division, which had the shortest calculated cycle time.

2. A method according to claim 1, wherein cycle times are calculated for a plurality of work cycles for each of the plurality of combinations.

3. A method according to any of the preceding claims, wherein the step of defining the layout (150) includes choosing a layout (150) out of a limited number of possible layouts (150).

4. A method according to any of the preceding claims, wherein the step of defining the layout (150) is executed by a computer.

5. A method according to any of the preceding claims, wherein the step of defining the work area division (90) is executed by a computer.

6. A method according to any of the preceding claims, wherein the number of different combinations of layouts (150) and work area divisions (90) is at least five, such as at least ten, at least fifty, at least hundred, at least five hundred, at least thousand, at least five thousand, at least ten thousand, at least fifty thousand, or at least hundred thousand.

7. A robot system (140) comprising:
at least two manipulators (30, 40) with a respective maximum work area (10, 20), which is a volume that the respective manipulator (30, 40) constrained by its mechanical structure can reach, and with a common work area (50) which is a part of a maximum work area that each of the manipulators (30, 40) can reach, such that each manipulator (30, 40) has an exclusive work area that only the respective manipulator (30, 40) can reach; and
a robot controller comprising at least one layout (150) of the robot system (140),
**characterized in that** the robot controller is configured to:
- define a work area division (90) by dividing the common work area (50) between the at least two manipulators (30, 40),
- define a plurality of different combinations of layouts (150) of the robot system (140) and work area divisions (90), and
- calculate a cycle time for at least one work cycle for each of the plurality of combinations, wherein a cycle time is a time needed for the robot system (140) to execute a task sequence once or an average time needed for the robot system (140) to execute the task sequence when a number of task sequences is executed, wherein the cycle time is calculated while each of the manipulators (30, 40) is allowed to operate only within its exclusive work area and within that part of the common work area which is allocated to the respective manipulator (30, 40) according of the work area division of that combination, and
- run the work cycle in accordance with that combination, from said combinations of layout and work area division, which had the shortest calculated cycle time.

8. A robot system (140) according to claim 8, wherein cycle times are calculated for a plurality of work cycles for each of the plurality of combinations.

9. A robot system (140) according to any of the claims 8 to 10, wherein the robot controller is configured to define the layout (150).

10. A robot system (140) according to claim 11, wherein the robot controller is configured to choose the layout (150) out of a limited number of possible layouts (150).

11. A robot system (140) according to any of the claims 8 to 12, wherein the number of different combinations of layouts (150) and work area divisions (90) is at least five, such as at least ten, at least fifty, at least hundred, at least five hundred, at least thousand, at least five thousand, at least ten thousand, at least fifty thousand, or at least hundred thousand.
